# EUROPEAN PATENT APPLICATION

(11) **EP 4 586 060 A1**
(43) Date of publication of application: **16.07.2025**
(21) Application number: 23877513.4
(22) Date of filing: 14.09.2023
(51) Int. Cl.: G06F 3/041, G06F 3/0488, G06F 3/04842

(54) **ELECTRONIC DEVICE AND METHOD FOR IMPROVING FORCE TOUCH OPERATION THEREOF**

(30) Priority: 11.10.2022 KR 20220129975; 19.12.2022 KR 20220178409
(71) Applicant: Samsung Electronics Co., Ltd., Suwon-si, Gyeonggi-do 16677 (KR)
(72) Inventor: KYUNG, Sunghyun, Suwon-si, Gyeonggi-do 16677 (KR); KIM, Sangheon, Suwon-si, Gyeonggi-do 16677 (KR); LIM, Yeunwook, Suwon-si, Gyeonggi-do 16677 (KR)
(74) Representative: HGF
(86) International application number: PCT/KR2023/013792
(87) International publication number: WO 2024/080584

(57) **Abstract**

An electronic device according to an embodiment may include: a display; a touch sensor; a memory; and a processor, wherein the memory includes instructions configured to cause the processor to: determine whether a force touch which gradually increases an amount of change in skin pressure depending on a touch area within a long touch detection time is recognized on the basis of touch data received from the touch sensor; execute a force touch action function mapped to the force touch on the basis of force touch recognition being maintained for a predetermined period of time; learn a malfunction situation for the force touch; and display a sensitivity correction UI on the display when sensitivity adjustment of the force touch is required.

## Description

### [Technical Field]

Various embodiments relate to an electronic device and a method for improving a force touch operation thereof and, more specifically, to an electronic device and a method for improving a force touch operation based on artificial intelligence.

### [Background Art]

Electronic devices including touch screens are widely being used. These electronic devices may accurately identify a touch input through the touch screens, thereby providing users with a satisfying experience.

Such a touch input may be classified as various types of inputs, such as a force touch, a long touch, a tap touch (or short touch), and a multi-touch. A force touch may indicate a touch made by a user applying a pressure of a predetermined intensity or higher with a finger, and a long touch may indicate a touch of maintaining a pressure for a predetermined time or longer regardless of a particular pressure intensity.

There are 3D touch and haptic touch as touch input technologies for distinguishing between a force touch and a long touch. 3D touch is a technology of recognizing a pressure intensity by using a pressure sensor (e.g., a hardware component), and haptic touch may be a technology of recognizing how long a user makes a touch, by means of software.

### [Disclosure of Invention]

### [Technical Problem]

However, in a haptic touch method, since software is used to recognize how long a user makes a touch, the force applied to a screen is unrecognizable, and thus it may be difficult to provide a function of taking a 2-step action by pressing the screen harder. For 3D touch, a change in the gap between beam lights and the display length is detected to detect how hard the user presses the screen. In this case, there should be no errors in the linear display gap, the sensor required to detect same is expensive, and due to the characteristics of the display (e.g., OLED), adding extra sensors may lead to design challenges. Additionally, 3D touch is difficult to detect unless the user presses the exact part of the screen hard enough, and the user may need to relay on sensory judgment to perform a force touch input and a long touch input, which could be a drawback.

In addition, while the intensity and time of a touch may vary for each user, electronic devices typically determine the pressure intensity or touch time with a uniform pressure and/or fixed value, which could lead to relative recognition errors in operation. Moreover, there is no user interface (UI) provided that is capable of distinguishing between a long touch and a force touch.

Embodiments of this document are to provide a method of analyzing the variation (or skin compression based on a touch area) of a user's skin area without a separate pressure sensor to determine whether a force touch is recognized, so as to improve the recognition rate of a force touch.

Embodiments of this document are to provide a method of dynamically learning a touch recognition area according to a form factor state and/or a grip state of an electronic device to reflect a user characteristic so as to improve the recognition rate of a force touch.

Embodiments of this document are to provide a method of providing an intuitive state change for a long touch and a force touch so as to resolve the ambiguous distinction between a long touch and a force touch.

Embodiments of this document are to provide a method of, when a force touch action based on a force touch is performed, reconfiguring the layout of an app feature-based screen so as to improve usability.

The technical objectives intended to be achieved by the present document are not limited to those mentioned above, and other technical objectives not explicitly stated herein will be clearly understood by those skilled in the art to which the present invention pertains based on the description provided below.

### [Solution to Problem]

An electronic device according to an example embodiments comprises a display. An electronic device according to an example embodiments comprises a touch sensor. An electronic device according to an example embodiments comprises a memory. An electronic device according to an example embodiments comprises and a processor. The memory according to an example embodiments comprises instructions configured to cause the processor to determine whether a force touch which gradually increases an amount of change in skin pressure depending on a touch area within a long touch detection time is recognized on the basis of touch data received from the touch sensor. The memory according to an example embodiments comprises instructions configured to cause the processor to execute a force touch action function mapped to the force touch on the basis of force touch recognition being maintained for a predetermined period of time. The memory according to an example embodiments comprises instructions configured to cause the processor to learn a malfunction situation for the force touch. The memory according to an example embodiments comprises instructions configured to cause the processor to display a sensitivity correction UI on the display when sensitivity adjustment of the force touch is required.

A method for improving a force touch operation according to an example embodiments comprises receiving touch data received from a touch sensor. The method according to an example embodiments comprises, based on the touch data, determining whether a force touch having a gradually increasing variation of skin compression according to a touch area is recognized within a long touch detection time. The method according to an example embodiments comprises based on recognition of the force touch, executing a force touch action function mapped to the force touch. The method according to an example embodiments comprises at a time of the recognition of the force touch, learning a malfunction situation for the force touch and, in case that sensitivity adjustment of the force touch is required, displaying a sensitivity correction UI on a display.

### [Advantageous Effects of Invention]

By an electronic device and a method according to an embodiment, a touch recognition area according to a form factor state (e.g., form factor change) and/or a grip state of the electronic device may be learned and a force touch recognition algorithm (e.g., a reference area or a threshold value) may be dynamically changed so as to improve the recognition rate of a force touch and usability.

By an electronic device and a method according to an embodiment, an intuitive situation feedback for recognition of a long touch and a force touch may be provided so as to resolve the ambiguous distinction between a long touch and a force touch.

By an electronic device and a method according to an embodiment, a force touch operation being recognized differently from a user's intent may be determined and a user feedback related to touch sensitivity adjustment may be induced to resolve a malfunction recognition so as to improve force touch recognition intensity (sensitivity).

The effects obtained from the present disclosure are not limited to those mentioned above, and other effects not explicitly stated herein will be clearly understood by those skilled in the art to which the present disclosure pertains based on the description provided below.

### [Brief Description of Drawings]

FIG. 1 is a block diagram illustrating an example electronic device in a network environment according to various embodiments.
FIG. 2(A) to FIG. 2(H) illustrates the shapes of various form factors of an electronic device according to various embodiments.
FIG. 3 illustrates a platform structure of an electronic device according to various embodiments.
FIG. 4A to FIG. 4C are diagrams illustrating a force touch recognition operation based on artificial intelligence according to an embodiment.
FIG. 5 is a diagram briefly illustrating a configuration of an electronic device according to an embodiment.
FIG. 6 is a diagram illustrating force touch and long touch determination times according to an embodiment.
FIG. 7 illustrates a method of improving an artificial intelligence-based force touch operation of an electronic device according to an embodiment.
FIG. 8 illustrates a screen for configuring a force touch action function according to an embodiment.
FIG. 9 illustrates force touch management screens of an electronic device according to an embodiment.
FIG. 10 illustrates force touch management screens of an electronic device according to an embodiment.
FIG. 11 illustrates a method of improving an artificial intelligence-based force touch operation of an electronic device according to an embodiment.
FIG. 12 illustrates touch gesture processing operations according to an embodiment.
FIG. 13 illustrates a force touch learning method of an electronic device according to an embodiment.
FIG. 14 illustrates screens of inducing touch sensitivity adjustment according to force touch learning at the time of force touch management by an electronic device according to an embodiment.
FIG. 15 illustrates manual learning configuration screens for touch area learning at the time of force touch management by an electronic device according to an embodiment.
FIG. 16 to FIG. 20 illustrate force touch management inventions for each force touch action configuration according to various embodiments.
FIG. 21 illustrates a screen of supporting an on/off configuration of a force touch action function in an electronic device according to an embodiment.

### [Mode for the Invention]

The electronic device according to various embodiments may be one of various types of electronic devices. The electronic devices may include, for example, a portable communication device (e.g., a smartphone), a computer device, a portable multimedia device, a portable medical device, a camera, a wearable device, a home appliance, or the like. According to an embodiment of the disclosure, the electronic devices are not limited to those described above.

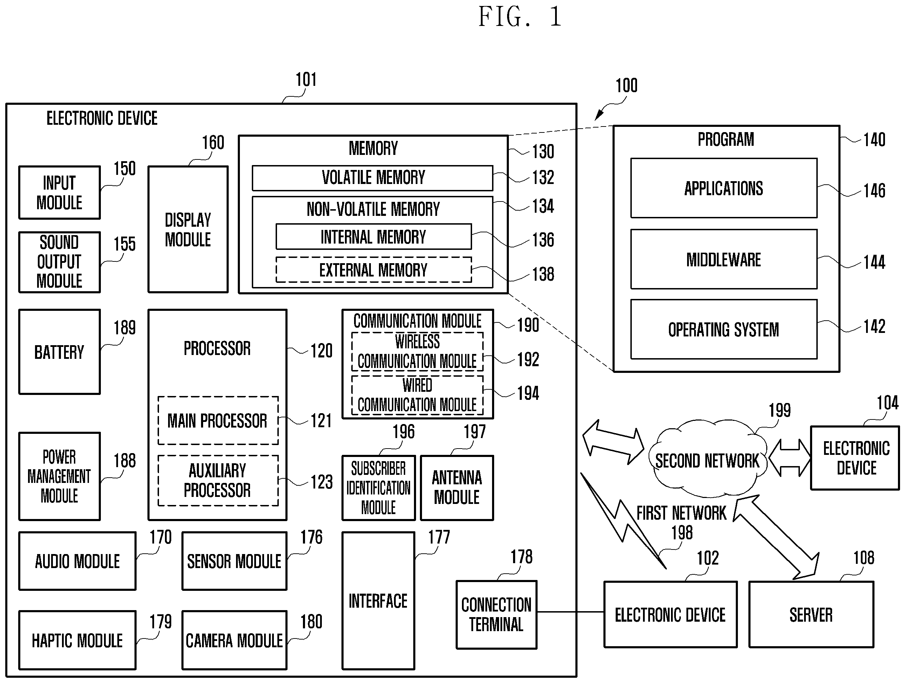

FIG. 1 is a block diagram illustrating an example electronic device in a network environment according to various embodiments.

Referring to FIG. 1, an electronic device 101 in a network environment 100 may communicate with an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input device 150, a sound output device 155, a display device 160, an audio module 170, a sensor module 176, an interface 177, a haptic module 179, a camera module 180, a power management module 188, a battery 189, a communication module 190, a subscriber identification module (SIM) 196, or an antenna module 197. In various embodiments, at least one (e.g., the display device 160 or the camera module 180) of the components may be omitted from the electronic device 101, or one or more other components may be added in the electronic device 101. In various embodiments, some of the components may be implemented as single integrated circuitry. For example, the sensor module 176 (e.g., a fingerprint sensor, an iris sensor, or an illuminance sensor) may be implemented as embedded in the display device 160 (e.g., a display).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may load a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), and an auxiliary processor 123 (e.g., a graphics processing unit (GPU), an image signal processor (ISP), a sensor hub processor, or a communication processor (CP)) that is operable independently from, or in conjunction with, the main processor 121. Additionally or alternatively, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196).

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element including a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In an embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, or any combination thereof, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The machine-readable storage medium may be provided in the form of a non-transitory storage medium. Wherein, the "non-transitory" storage medium is a tangible device, and may not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

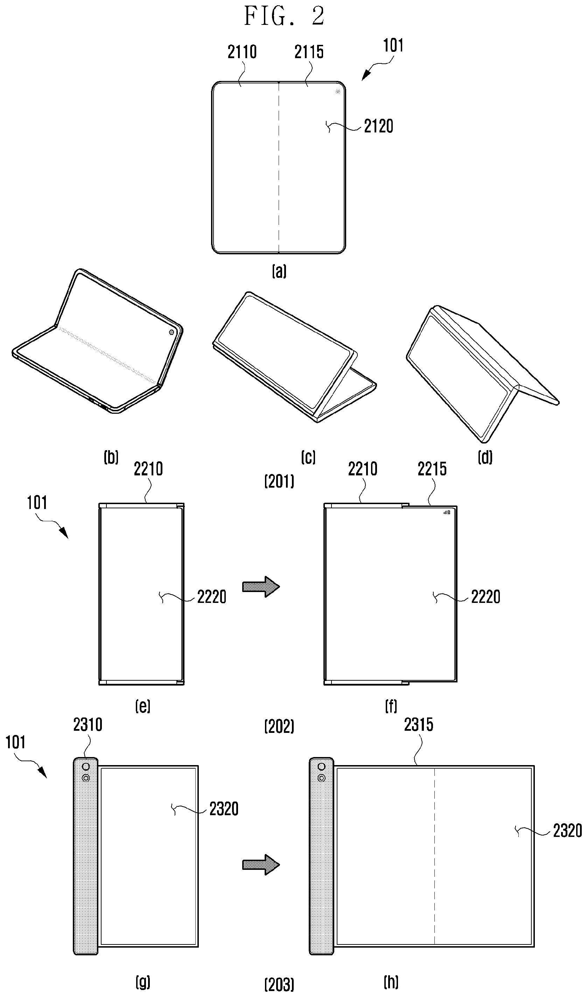

FIG. 2(A) to FIG. 2(H) illustrates the shapes of various form factors of an electronic device according to various embodiments.

Referring to FIG. 2(A) to FIG. 2(H), an electronic device (e.g., the electronic device 101 in FIG. 1) according to various embodiments may include various types of housing structures so that a display region of a display (e.g., the display module 160 in FIG. 1) on which visual information is displayed is variable. According to an embodiment, the electronic device 101 may include an electronic device of a bar type or a plate type other than the types illustrated in FIG. 2.

The sizes or ratios of the displays or display regions of the electronic devices 101 illustrated in FIG. 2(A) to FIG. 2(H) may be changed according to a form factor state. The display region may indicate a region of the display region which is exposed outside or activated to display visual information.

For example, as illustrated in FIG. 2(A) to FIG. 2(D), the electronic device 101 may be implemented as a foldable electronic device 101 operating in an in-folding, out-folding, or in/out-folding manner according to the rotation of a first housing 2110 and a second housing 2115 with respect to each other. In the foldable electronic device, the display region of a display 2120 may be changed according to a form factor state. For example, the foldable electronic device may be changed to an unfolded state (or first state), a folded state (e.g., second state), or an intermediate state (e.g., third state) according to the angle or distance between the first housing 2110 and a second housing 2115.

For another example, as illustrated in FIG. 2(E) and FIG. 2(F), the electronic device 101 may be implemented as a slidable electronic device operating in a manner where a second housing 2215 slides with respect to a first housing 2210 so as to slide inside or slide out of the first housing. In the slidable electronic device, the display region of a display 2220 may be expanded or reduced according to a form factor state.

For another example, as illustrated in FIG. 2(g) and FIG. 2(h), the electronic device 101 may be implemented as a rollable electronic device operating in a manner where a second housing 2315 rolls with respect to a first housing 2310 so as to roll inside or roll out of the first housing. In the rollable electronic device, the display region of a display 2320 may be expanded or reduced according to a form factor state.

In case of the slidable electronic device or the rollable electronic device, there may be a closed state in which the display is not expanded, an intermediate state, or an open state in which the display 2220 or 2320 is expanded, according to a direction in which the second housing 2215 or 2315 moves with respect to the first housing 2210 or 2310. The open state may be defined as a state where the display region is expanded compared to the closed state, and may provide display regions of various areas according to a movement position of the second housing 2215 or 2315.

Hereinafter, the electronic device 101 according to various embodiments disclosed herein is illustrated as an example of an electronic device (e.g., foldable electronic device) having a form factor of a foldable type, but the electronic device 101 and an operation thereof according to various embodiments are not limited thereto. For example, the electronic device 101 may have various form factors, such as a bar type or plate type, a rollable type, and/or a slidable type and may also operate according thereto.

According to an embodiment, the electronic device 101 of various form factors may provide a force touch management function based on artificial intelligence. For example, the electronic device 101 may determine whether a force touch is recognized, based on the variation (or a skin area/touch area according to skin compression) of a skin area, based on artificial intelligence software without a physical pressure sensor.

According to an embodiment, the electronic device 101 of various form factors may provide a force touch situation user interface (UI), based on force touch recognition.

According to an embodiment, the electronic device 101 of various form factors may provide a function (e.g., force touch action function) of mapping an action executable by a force touch according to a user configuration. The force touch action function may include an action function designatable for each application and/or a global action function applicable to an electronic device system.

According to an embodiment, the electronic device 101 of various form factors may learn a touch recognition area according to a form factor state (e.g., a first state, a second state, or an intermediate state) and a grip state (e.g., grip by one hand or grip by two hands), and dynamically change (or adjust) a force touch recognition algorithm (e.g., a reference touch area or a threshold value).

According to various embodiments, the electronic device 101 of various form factors may learn whether a force touch consistent with the user's intent is recognized, and when there is need to adjust force touch sensitivity according to a learning situation, provide a sensitivity correction user interface (UI).

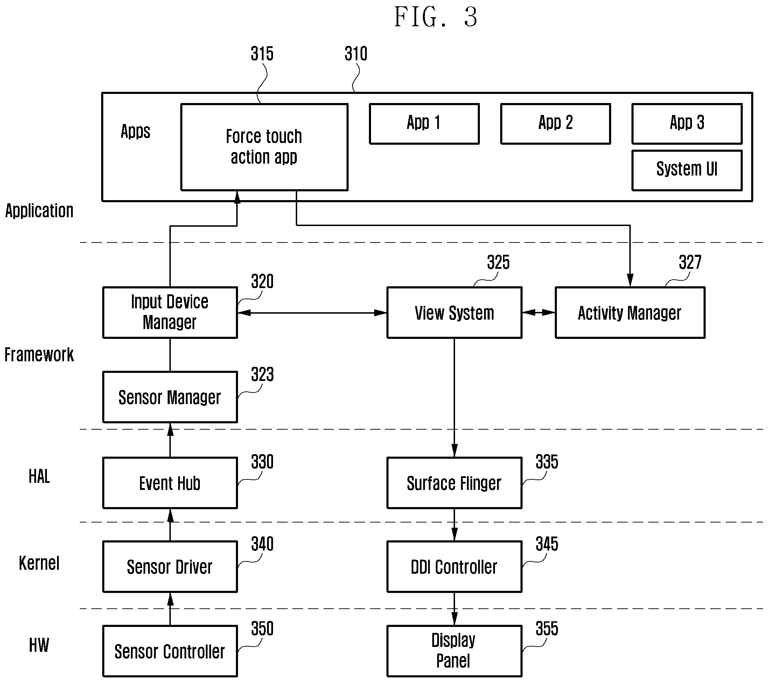

FIG. 3 illustrates a platform structure of an electronic device according to various embodiments.

Referring to FIG. 3, an electronic device (e.g., the electronic device 101 in FIG. 1) according to an embodiment may process a force touch management function based on artificial intelligence, based on the platform structure illustrated in FIG. 3. The modules described with reference to FIG. 3 may be understood as functions performed by a processor (e.g., the processor 120 in FIG. 1) of the electronic device 101. The processor 120 may execute instructions stored in a memory (e.g., the memory 130 in FIG. 1) to implement a software module, and control hardware (e.g., the sensor module 1760 in FIG. 1) associated with a function. Some of the modules may be implemented hardware-wise, and others may be implemented software-wise. The modules may be classified as an application layer, a framework layer, a hardware abstraction layer (HAL), a kernel driver layer, and/or a hardware (HW) layer, and at least some of the illustrated elements may be changed.

The application layer may include an application 310.

The application 310 may be an application 310 which is stored in the memory 130, is executable by the processor 120, or is installed. The application 310 may include, for example, a force touch action app 315, app1, app2, app3, a system user interface (UI), and/or various applications executable in the electronic device 101, and the type thereof may not be limited.

The force touch action app 315 according to an embodiment may be an application that manages a force touch function based on artificial intelligence and provides an interaction with the user to configure a force touch action. For example, the force touch action app 315 may be an application capable of applying a force touch action configuration function, a force touch learning function (e.g., a force touch sensitivity adjustment function and a touch area adjustment function), and a function of changing a screen layout according to a force touch action. The force touch action app 315 and a management operation thereof will be described with reference to drawings described later.

The system user interface (UI) may manage a system of the electronic device 101, such as a screen related to a notification bar or a quick view.

The framework layer may provide various functions to the application 310 so that the application 310 uses a function or information provided from at least one resource of the electronic device 101.

The framework layer may include, for example, an input device manager 320, a sensor manager 323, a view system 325, and an activity manager 327, but is not limited thereto.

The input device manager 320 may determine whether a force touch is recognized, based on a signal generated from a touch sensor (or touch data transferred through the sensor manager 323), and transfer force touch recognition information (or a force touch event) to the force touch action app 315. For example, the input device manager 320 may observe whether a force touch occurs, during a force touch observation interval (e.g., 300 ms), a period (e.g., 500 ms) configured for determining a long touch, and then perform a pressure calculation (e.g., skin area change) for the force touch to determine whether a force touch is recognized.

The sensor manager 323 may control a sensor, based on a configuration of the application 310. The sensor manager 323 may collect and control sensor information, based on the usability of a sensor module. For example, when a user's touch input occurs, the sensor manager 323 may control a touch sensor to instruct same to generate touch data. For example, the sensor manager 323 may generate touch data corresponding to a user's touch and transfer same to the input device manager 320.

The view system 325 may include a set of expandable views used to create an application user interface. According to an embodiment, the view system 325 may be a program for drawing at least one layer, based on the display region resolution of the display. According to an embodiment, the application 310 may use a view (e.g., a drawing library) to draw at least one layer based on the display region resolution of the display.

The activity manager 327 may manage a life cycle of activity. According to an embodiment, the activity manager 327 may manage execution and termination of the application 310.

The hardware abstraction layer is an abstracted layer between multiple hardware modules (e.g., the display module 160 and the sensor module 176 in FIG. 1) included in the hardware layer and software of the electronic device 101, and may include an event hub 330 and a surface flinger 335.

The event hub 330 may be an interface in which an event occurring in a touch circuit and a sensor circuit is standardized. The event hub 330 may be included in an abstracted layer (hardware abstraction layer, HAL) between multiple hardware modules included in the hardware layer and software of the electronic device.

The surface flinger 335 may synthesize multiple layers. For example, the surface flinger 335 may provide data indicating synthesized multiple layers to a display controller 345. A display controller (display driver IC, DDI) 345 may indicate a graphic display controller or a display drive circuit controller.

The kernel layer may include various drivers for controlling various hardware modules (e.g., the display module 160 and the sensor module 176) included in the electronic device 101. For example, the kernel layer may include a sensor driver 340 including an interface module that controls a sensor controller 350 connected to the sensor module 176, and the display controller (display driver IC, DDI) 345 that controls the display panel 355 connected to the display module 160.

The sensor driver 340 may connect an operating system to a sensor, and include information on a driving method, a characteristic, and/or a function of the sensor. The sensor driver 340 may include an interface module that controls the sensor controller connected to the sensor. The display controller 345 may receive data representing synthesized multiple layers from the surface flinger 335, and may correspond to a display drive circuit.

The hardware layer may include a hardware module or element (e.g., the sensor controller 350 and the display panel 355) included in the electronic device 101, but is not limited thereto and may include the elements illustrated in FIG. 1.

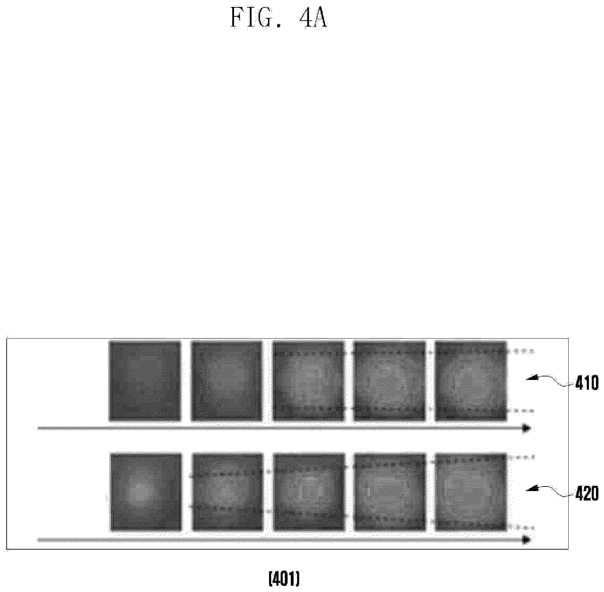

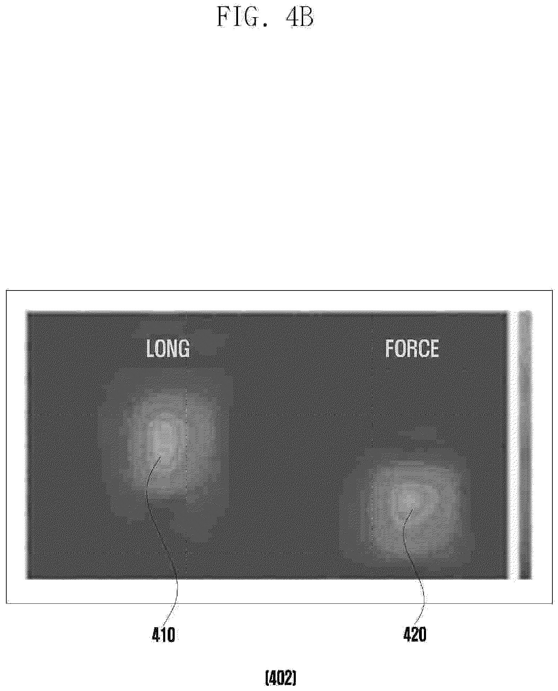

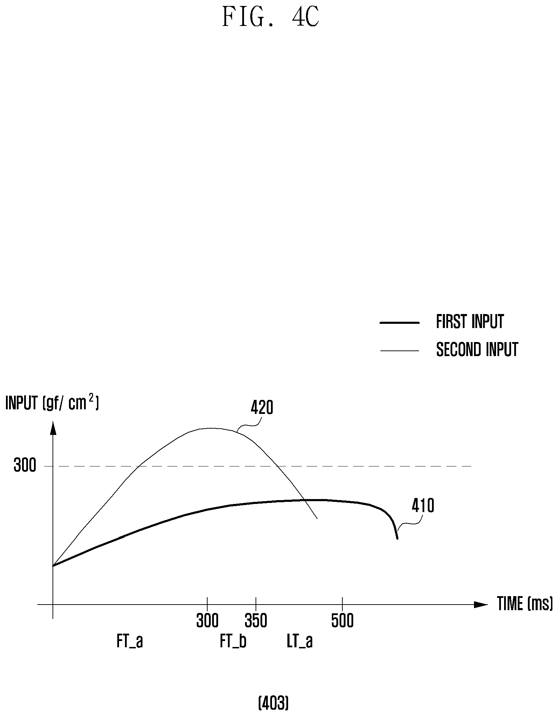

FIG. 4A to FIG. 4C are diagrams illustrating a force touch recognition operation based on artificial intelligence according to an embodiment.

Referring to FIG. 4A to FIG. 4C, an electronic device (e.g., the electronic device 101 in FIG. 1) according to an embodiment may recognize a force touch, based on the variation of a skin area or the variation of a touch area caused by skin compression, based on artificial intelligence software. The electronic device 101 of the disclosure may not include a physical pressure sensor.

The electronic device 101 may distinguish between a long touch and a force touch, based on the variation of skin compression based on a touch area.

For example, as indicated by reference numeral <401>, it may be noted that when a user performs a long touch 410 on a touch screen, the variation of skin compression based on a touch area during a touch time (e.g., 300 ms) maintains the same size after a predetermine time, and on the contrary, in a case of a force touch 420 of pressing the touch screen hard, the variation of skin compression based on a touch area has a size gradually increasing.

As indicated by reference numeral <402>, the electronic device may, when the variation of skin compression based on a touch area for a touch occurring for a predetermined time increases, classify the touch as the force touch 420, and when the variation of skin compression based on the touch area is constant, classify the touch as the long touch 410.

In this case, the long touch 410 and the force touch 420 may have the same initial touch time. The electronic device 101 may observe whether the force touch 420 is generated within a long touch detection time (e.g., LT_a) serving as a criterion to determine the long touch 410, and then determine force touch recognition in a force touch determination interval (FT_b). For example, the electronic device 101 may divide into a force touch observation interval (FT_a), the force touch determination interval (FT_b), and a long touch determination interval (LT_a), and distinguish whether a touch is the long touch 410 and the force touch 420 according to a touch characteristic. As indicated by reference numeral <403>, the electronic device 101 may determine a second touch input as the force touch 420 because the touch pressure thereof exceeds a reference value (e.g., 300 gf/cm²) of a touch pressure in the force touch observation interval. On the contrary, the electronic device 101 may not recognize a first touch input as a force touch because the touch pressure thereof is lower than the reference value in the force touch observation interval, and may recognize the first touch input as the long touch 410 in the long touch determination interval.

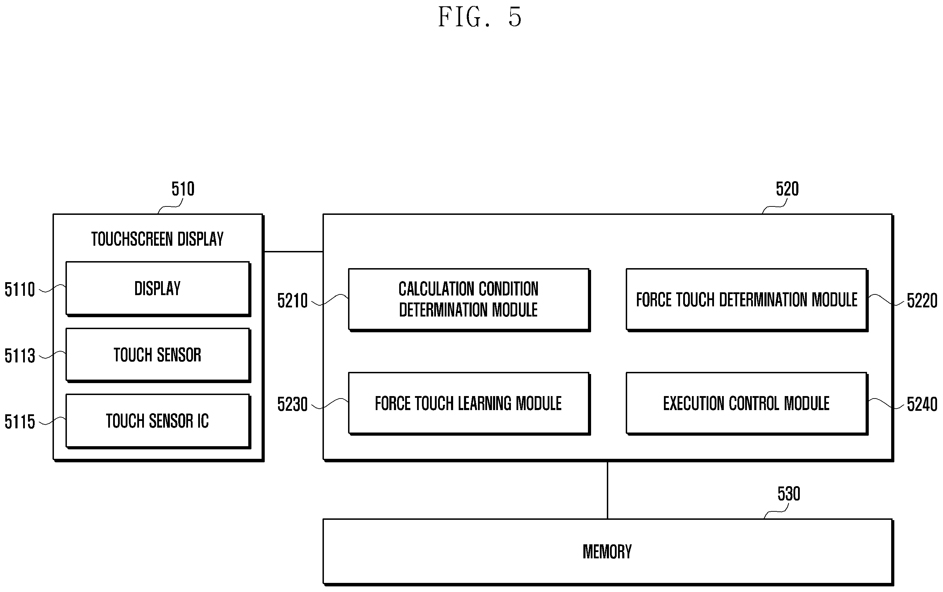

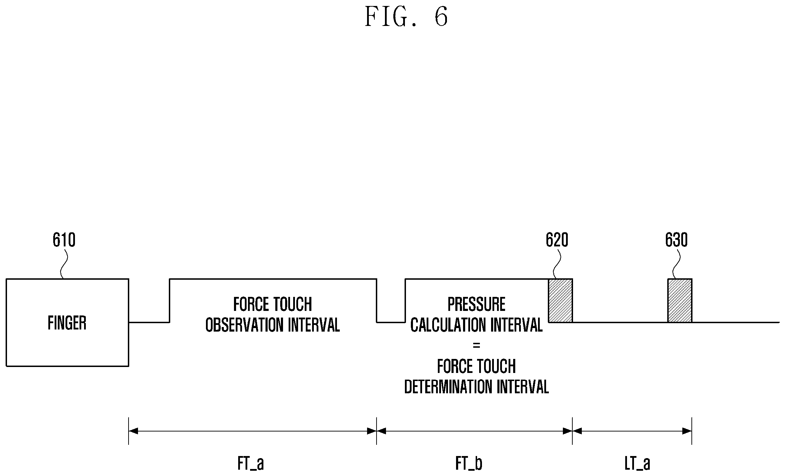

FIG. 5 is a diagram briefly illustrating a configuration of an electronic device according to an embodiment, and FIG. 6 is a diagram illustrating force touch and long touch determination times according to an embodiment.

Referring to FIG. 5, an electronic device (e.g., the electronic device 101 in FIG. 1) according to an embodiment may include a touchscreen display 510 (e.g., the display module 160 in FIG. 1), a processor 520 (e.g., the processor 120 in FIG. 1), and a memory 530 (e.g., the memory 130 in FIG. 1). The electronic device 101 of FIG. 5 may further include at least some of elements and/or functions of the electronic device 101 in FIG. 1.

The touchscreen display 510 may include a display 5110, a touch sensor 5113, and a touch sensor IC 5115.

According to an embodiment, the display 5110 may display various images under the control of the processor 520. The display 5110 may be implemented as one of a liquid crystal display (LCD), a light-emitting diode (LED) display, a micro LED display, a quantum dot (QD) display, or an organic light-emitting diode (OLED) display, and is not limited thereto.

According to an embodiment, the touchscreen display 510 may be at least partially flexible, and may be implemented as a foldable display, a rollable display, a slidable display, or a stretchable display.

The touchscreen display 510 may detect a touch and/or proximity touch (or hovering) input made by using a part (e.g., a finger) of the user's body or an input device (e.g., a stylus pen).

The touch sensor 5113 may convert touch inputs made through the user's finger or an input device into touch signals, and transmit the touch signals to the touch sensor IC 5115. The touch sensor may be implemented as, for example, one of an electrode sensor (conductivity sensor), a capacitive touch sensor, a resistive touch sensor, a surface touch sensor, a projected captivated (PCAP) touch sensor, or an ultrasonic touch sensor (surface acoustic wave touch sensor), and is not limited thereto.

The touch sensor IC 5115 may control the touch sensor to detect a touch input on at least one position. The touch sensor IC 5115 may generate touch data (e.g., a touch position, a touch area, touch video data, or a touch time) for a touch input detected based on a change of a detected signal (e.g., voltage, light quantity, resistance, or charge amount).

The memory 530 may store various instructions executable by the processor 520. Such instructions may include control commands such as arithmetic and logical operations, data transfer, or input/output which are recognizable by the processor 520. The memory 530 may include a volatile memory (e.g., the volatile memory 132 in FIG. 1) and a non-volatile memory (e.g., the non-volatile memory 134 in FIG. 1) so as to temporarily or permanently store various data.

The processor 520 may be an element that is operatively, functionally, and/or electrically connected to elements (e.g., the touchscreen display 510 and the memory 530) of the electronic device 101 so as to perform calculation or data processing related to control and/or communication of the elements. The processor 520 may include at least some of elements and/or functions of the processor 120 in FIG. 1. The operations performed by the processor 520 may be executed by instructions which are stored in the memory 130 and, when executed, cause the processor 120 to operate.

According to an embodiment, the processor 520 may detect various touch gestures based on touch signals, and execute a touch action corresponding to a touch gesture. For example, when a touch is maintained for a long touch detection time (LT_a) (e.g., approximately 500 ms), the processor 520 may detect a long touch.

According to an embodiment, the processor 520 may process (or perform) an operation related to a force touch management function based on artificial intelligence and a function (e.g., force touch action function) of mapping an action executable by a force touch according to a user configuration. The processor 520 may store, in a memory (e.g., a queue or a buffer register), touch data (e.g., a touch position, a touch area, touch video data, or a touch time) received from the touch sensor IC 5115. The processor 520 may align touch data in a queue and determine whether a force touch is recognized, based on the touch data aligned in the queue. There may be no limit to calculation and data processing functions implementable by the processor 520 on the electronic device 101. However, hereinafter, operations related to a force touch will be described.

According to an embodiment, the processor 520 may, in relation to a force touch operation, may include a calculation condition determination module 5210, a force touch learning module 5230, a force touch determination module 5220, and an execution control module 5240, and each module may be operated under the control of the processor 520.

The calculation condition determination module 5210 may observe whether there is a force touch, when a finger (or stylus pen) touches at least one point of the display for a configured reference time (e.g., approximately 300 ms) (e.g., a force touch observation interval (FT_a)) or longer, based on touch data. For example, the calculation condition determination module 5210 may, as illustrated in <FIG. 6>, after a touch made by a finger 610 is started, when the touch of the finger is maintained for a reference time (e.g., approximately 300 ms) or longer within the force touch observation interval (FT_a), determine that a calculation condition related to a force touch 620 is satisfied.

The force touch determination module 5220 may determine whether the force touch 620 exists, within a long touch detection period (LT_a) illustrated in <FIG. 6>. The force touch determination module 5220 may recognize the touch as a long touch 630 when a force touch is not observed and the touch is maintained up to the long touch detection period (LT_a).

The force touch determination module 5220 may, when the calculation condition related to the force touch is satisfied, determine whether a force touch is recognized, based on an artificial intelligence network using touch data in a pressure calculation interval (e.g., 300 ms-350 ms). For example, the force touch determination module 5220 may read touch data aligned in a queue with respect to a finger touch having a high priority. The force touch determination module 5220 may, after the force touch observation interval (FT_a), perform a pressure calculation for a touch being maintained in the pressure calculation interval (FT_b) to determine whether a force touch is recognized. The pressure calculation may be a process of, based on an artificial intelligence network, receiving pieces of touch data (or input data) and outputting pieces of force data (or output data). The touch data may indicate touch video data and the force data may indicate virtual force data.

The force touch determination module 5220 may analyze the variation (or skin compression based on a touch area) of the user's skin area obtained based on touch data, so as to distinguish between a force touch and a long touch. For example, the force touch determination module 5220 may recognize the touch as a force touch when a result of force touch observation indicates that a change in the skin area obtained based on the touch data gradually increases. The force touch determination module 5220 may determine the touch as a long touch when a result of force touch observation indicates that a change in the skin area does not gradually increase and the skin area is maintained at a constant size.

The execution control module 5240 may display a force touch situation UI on the display 5110 when the touch is recognized as a force touch. The force touch situation UI may be omitted according to a display configuration. The execution control module 5240 may execute a force touch action function mapped to (or configured for) a force touch when the recognition as the force touch is maintained for a configured time or is maintained while a force touch situation UI is displayed.

The execution control module 5240 may, when executing the force touch action function, reconfigure a screen layout to correspond to the force touch action function and/or an application characteristic to execute the force touch action function. The force touch action function may include an action function designatable for each application and/or a global action function applicable to an electronic device system. For example, the force touch action function may include, but is not limited to, a pop-up window execution function, a volume panel control function, a flash memo function, a function for creating and then sharing a screenshot, a clipboard function, a flashlight function, an auto-rotation function, and/or a mute control function.

According to an embodiment, the force touch learning module 5230 may control a touch sensitivity learning and/or touch area learning operation in relation to a force touch.

For example, the force touch learning module 5230 may record a malfunction situation in which a force touch different from the user's intent is recognized, when a force touch is released while a force touch situation UI is displayed or when a force touch is released after being recognized. For example, in a situation where a force touch situation UI is displayed for a configured time (e.g., n sec), based on an input within a force touch determination interval (e.g., 300-350 ms) being recognized as a force touch, when the user's touch input on a different region is received before the configured time is ended, the force touch learning module 5230 may consider that an unintended force touch has occurred and record this situation as a malfunction situation.

The force touch learning module 5230 may learn a malfunction situation for a force touch to perform force touch sensitivity correction. For example, when a situation where a force touch is released is repeated configured N or more times, the force touch learning module 5230 may display a sensitivity correction UI on the display 5110 to induce sensitivity correction. For another example, when a touch sensitivity configuration mode (or configuration screen) is entered according to a user request (e.g., manual adjustment), the force touch learning module 5230 may learn the user's touch data through the touch sensitivity configuration mode to adjust the sensitivity of a force touch.

For another example, the force touch learning module 5230 may learn a touch recognition area (or force touch recognition area) according to a form factor state and/or a grip state of the electronic device, and dynamically change a force touch recognition algorithm (e.g., a reference area or a threshold value). For example, when a touch of a finger is made according to various angles, the force touch learning module 5230 may store the dynamic area of the touch in a queue and train a force touch recognition model with the dynamic area of the touch to update (or customize) the model.

The intensity of a touch or the area of a finger making the touch may differ for each user. In addition, the touch area may vary according to the user's thumb, middle finger, index finger, ring finger, or little finger, and the touch area may differ according to the angles of the left and right hands. For example, the touch area of the thumb may dynamically change within a rotation radius of the thumb.

The force touch learning module 5230 may learn a recognition area (hereinafter, a touch recognition area) in which a force touch is made and the variation thereof according to a form factor state (e.g., a first state, a second state, or an intermediate state) and a grip state (e.g., grip by one hand or grip by two hands) of the electronic device 101.

For example, when a foldable electronic device is used as an example, the force touch learning module 5230 may store, in a queue, a touch recognition area within the rotation radius of the thumb of the right or left hand when one hand is used to grip the device in a folded state. Alternatively, the force touch learning module 5230 may store, in a queue, a touch recognition area of the left or right hand in a two-hand grip state. Alternatively, the force touch learning module 5230 may store, in a queue, a touch recognition area for the index finger of the right hand while the foldable electronic device is gripped by the left hand. The touch recognition area stored in the queue may be learned (e.g., machine learning or deep learning), based on an artificial intelligence network so as to increase a recognition rate.

An electronic device applied to this document may, when a touch recognition area is reduced due to the rotation or tilt of the finger angle, have difficult in recognizing a force touch, but learn a touch area and a variation to update a force touch recognition algorithm (e.g., force touch recognition model) so as to improve the recognition rate of a force touch.

An electronic device (e.g., the electronic device 101 in FIG. 1 and FIG. 2) according to an embodiment may include a display (e.g., the display module 160 in FIG. 1 or the display 5110 in FIG. 5). The electronic device 101 according to an embodiment may include a touch sensor (e.g., the input module 150 in FIG. 1 or the touch sensor 5113 in FIG. 5). The electronic device 101 according to an embodiment may include a memory (e.g., the memory 130 in FIG. 1 or the memory 530 in FIG. 3). The electronic device 101 according to an embodiment may include a processor (e.g., the processor 120 in FIG. 1 or the processor 520 in FIG. 5). The memory 530 according to an embodiment may include an instruction configured to cause the processor 520 to, based on touch data received from the touch sensor 5113, determine whether a force touch having a gradually increasing variation of skin compression according to a touch area is recognized within a long touch detection time. The memory 530 according to an embodiment may include an instruction causing the processor 520 to, based on recognition of the force touch being maintained for a predetermined time, execute a force touch action function mapped to the force touch. The memory 530 according to an embodiment may include instructions configured to cause the processor 520 to learn a malfunction situation for the force touch and, in case that sensitivity adjustment of the force touch is required, display a sensitivity correction UI on the display 5110.

According to an embodiment, the display 5110 may include a flexible display having a variable display region in which visual information is displayed.

According to an embodiment, the processor 520 may be configured to receive an electronic device form factor state and/or grip state from a sensor module and learn a touch recognition area according to the electronic device form factor state and/or grip state to dynamically adjust a threshold value of a force touch recognition model configured to determine skin compression.

According to an embodiment, the force touch recognition model may be configured to receive touch data as input data and output force touch data, based on an artificial intelligence network.

According to an embodiment, the processor 520 may be configured to display a force touch situation UI on the display 5110, based on the recognition of the force touch.

According to an embodiment, the processor 520 may be configured to, in case that a user's touch release occurs in a state where the force touch situation UI is displayed or after the force touch is recognized, record a force touch malfunction situation and, in case that the force touch malfunction situation is repeated configured N or more times, recognize that sensitivity adjustment of the force touch is required.

According to an embodiment, the processor 520 may be configured to observe whether a force touch occurs in a force touch observation interval before a long touch detection period, and perform a pressure calculation in a force touch determination interval to determine whether a force touch is recognized.

According to an embodiment, the processor 520 may be configured to, in case that a variation of skin compression based on a touch area gradually increases over time, observe that a corresponding touch is a force touch, and in case that a variation of skin compression based on a touch area maintains the same size over time, observe that a corresponding touch is a long touch.

According to an embodiment, the force touch action function may include an action function designatable for each application and/or a global action function applicable to an electronic device system.

According to an embodiment, the processor 520 may be configured to receive information on an application being executed and, in case that the force touch is recognized in a state where the application is executed, reconfigure a screen layout of the force touch action function, based on the information on the application to dynamically change and display a screen.

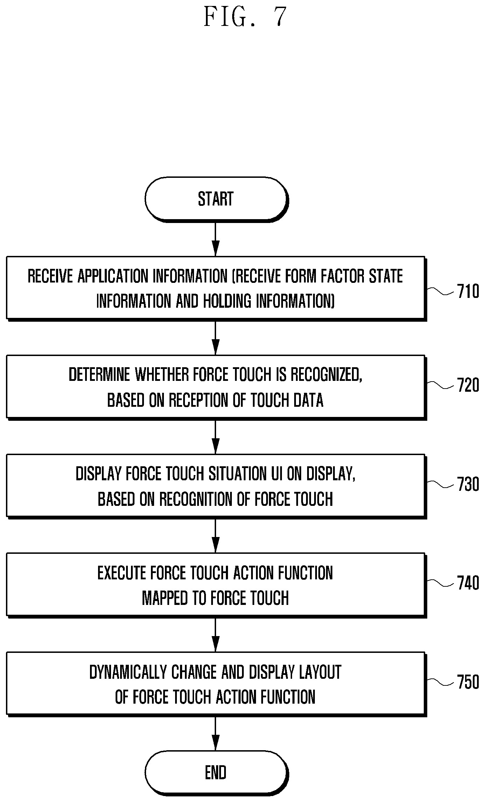

According to an embodiment, the sensitivity correction UI may include a touch controller and may be configured to enable touch sensitivity adjustment according to a position of the touch controller. FIG. 7 illustrates a method of improving an artificial intelligence-based force touch operation of an electronic device according to an embodiment.

In the embodiment below, operations may be sequentially performed, but sequential performance is not necessarily required. For example, the sequence of operations may be changed, and at least two operations may be performed in parallel.

Referring to FIG. 7, a processor (e.g., the processor 120 in FIG. 1 or the processor 520 in FIG. 5) of the electronic device 101 according to an embodiment may, in operation 710, receive application information, based on execution of an application.

The application information may include at least one of an app type, PACKAGE NAME, description information, app state information (e.g., background information, PIP information based on screen transition, attribute information (e.g., screen window information (e.g., popup, split state, rotation, position, or size information))), and landscape/portrait mode support information.

According to an embodiment, the processor 520 may receive form factor state information and holding information from one sensor (e.g., gyro, acceleration, hinge angle (Hall IC) sensor, or grip sensor), based on a change of a form factor state.

According to an embodiment, operation 710 may be omitted.

In operation 720, the processor 520 may determine whether a force touch is recognized, based on reception of touch data.

The processor 520 may analyze a feature of touch data from a time point at which a touch is started, to observe whether a force touch is generated and determine whether a force touch is recognized, before long touch determination. For example, the processor 520 may observe whether a force touch is generated during a force observation interval within a configured long touch detection period (e.g., 500 ms), and perform a pressure calculation for the touch after the force observation interval to determine whether a force touch exists. The processor 520 may perform long touch determination for the touch after force touch determination.

According to an embodiment, in the process of determining a force touch, the electronic device 101 may learn pieces of touch data to adjust touch sensitivity and adjust a threshold value for a touch area so as to improve a touch recognition rate. For example, the processor 520 may receive form factor state information and holding information of the electronic device and learn the user's touch recognition area according to the form factor state information and the holding information to dynamically adjust a threshold value for a touch area used to determine a force touch (or update a force touch recognition model).

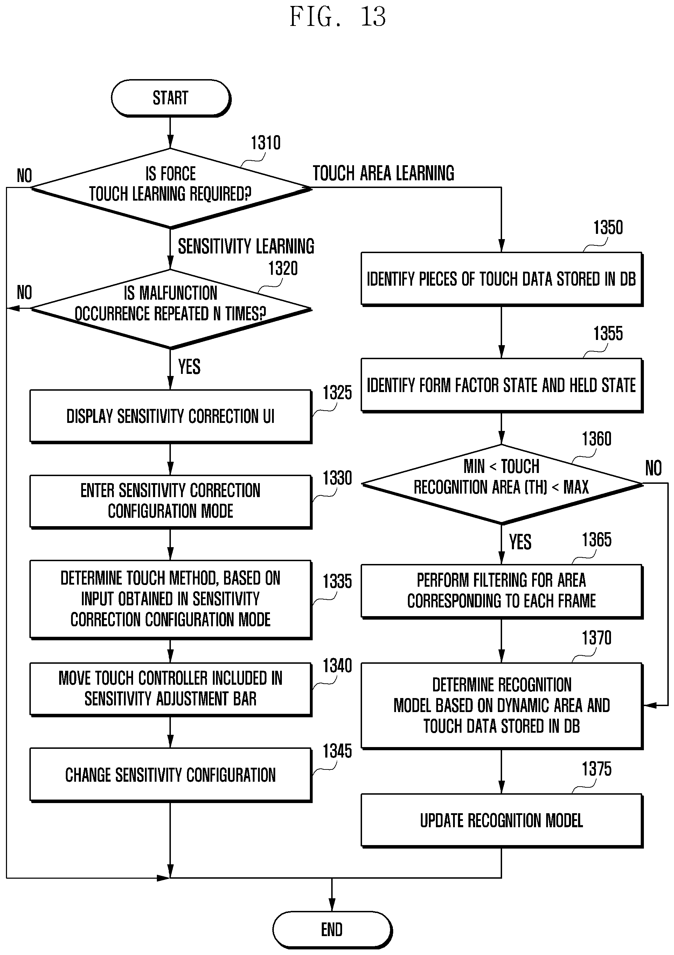

According to an embodiment, the processor 520 may learn a situation where a force touch unintended by the user is repeatedly recognized, and when it is determined that sensitivity adjustment is required, may induce sensitivity adjustment by providing a touch correction UI. Hereinafter, a force touch learning operation will be described with reference to FIG. 13 later.

In operation 730, the processor 520 may display a force touch situation UI on the display, based on recognition of a force touch.

The force touch situation UI may include at least one of a message and an animation object notifying the user of the occurrence of a force touch and the type and shape thereof is not limited. When the user recognizes, through the force touch situation UI, that an intended force touch has occurred, the force touch is maintained, and when the user recognizes that an unintended force touch is recognized, touch release may be performed.

According to an embodiment, operation 730 may be omitted.

In operation 740, the processor 520 may execute a mapped (or configured) force touch action function, based on the force touch recognition being maintained. For example, when the force touch is maintained while the force touch situation UI is displayed or when the force touch recognition is maintained, the processor 520 may execute a force touch action function mapped to the force touch.

In operation 750, the processor 520 may dynamically change a screen layout of the force touch action function and display same on the display. The processor 520 may reconfigure a screen layout, based on at least one of the form factor state of the electronic device and/or information on an application being executed, and display a screen for the force touch action function on the display.

For example, when a pop-up window execution function is mapped as the force touch action function, the processor 520 may execute a force touch action function of switching a full screen being currently displayed into a pop-up window screen, based on the recognition of a force touch, and reconfigure a screen layout and determine the size of a pop-up window, based on a feature (e.g., watching YouTube on the internet or reproducing a video) of an application (e.g., foreground application) being currently executed on the display, so as to display the pop-up window on the display. In this case, an icon (e.g., menu icon) included in the screen layout may be processed using a hiding function for screen optimization.

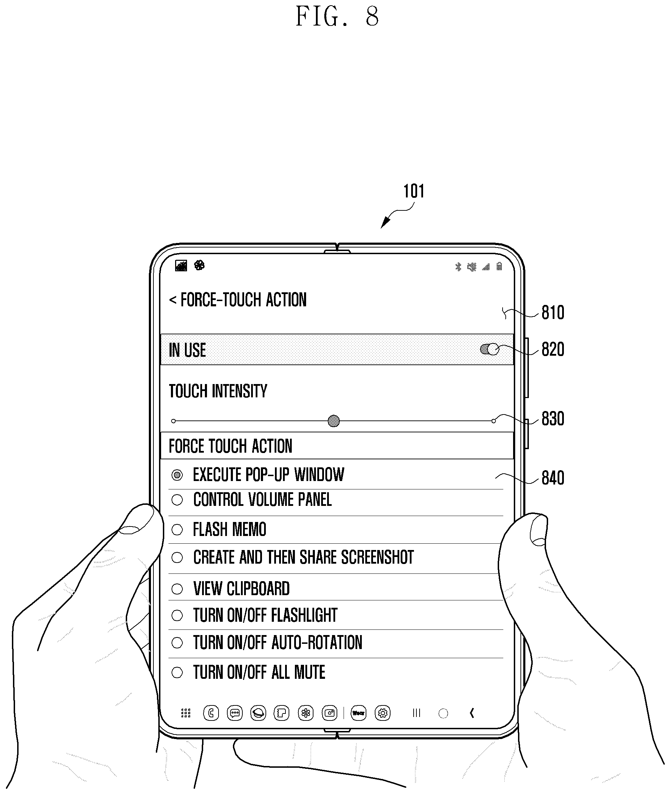

FIG. 8 illustrates a screen for configuring a force touch action function according to an embodiment.

Referring to FIG. 8, according to an embodiment, a processor (e.g., the processor 120 in FIG. 1 or the processor 520 in FIG. 5) of an electronic device (e.g., the electronic device 101 in FIG. 1) may display a screen 810 for configuring a force touch action function on a display (e.g., the display module 160 in FIG. 1 or the display 5110 in FIG. 5).

The screen 810 for configuring a force touch action function may include an on/off toggle item 820 enabling selection of use/non-use of a force touch action, a touch sensitivity adjustment bar 830 for adjusting touch sensitivity, and force touch action function items 840.

In the example of FIG. 8, the force touch action function items 840 are illustrated as including a pop-up window execution function, a volume panel control function, a flash memo function, a function for creating and then sharing a screenshot, a clipboard viewing function, a flashlight on/off function, an auto-rotation on/off function, and an all-mute on/off function, but are not limited thereto, and may be changed according to an electronic device configuration.

When the user selects one of the force touch action function items, the electronic device 101 may execute the force touch action function that is selected by the user (or is mapped or configured), based on recognition of a force touch.

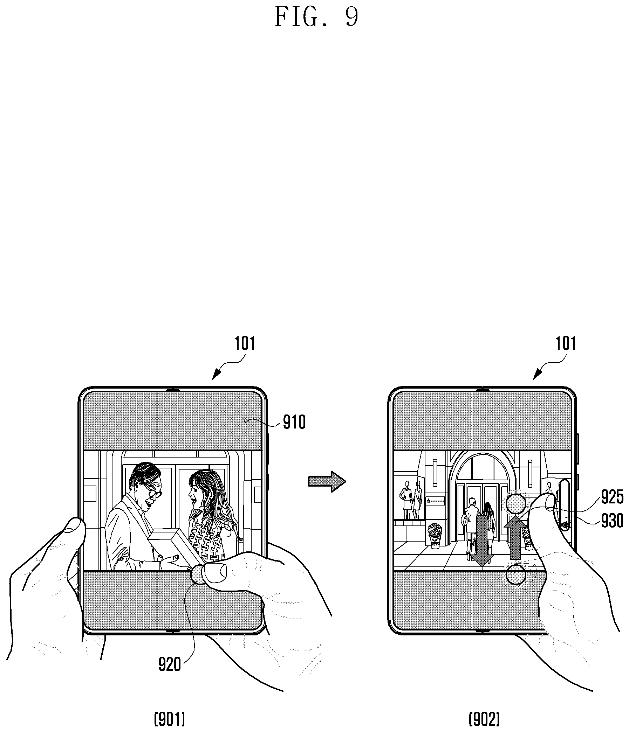

FIG. 9 illustrates force touch management screens of an electronic device according to an embodiment.

Referring to FIG. 9, in an electronic device (e.g., the electronic device 101 in FIG. 1) according to an embodiment, a volume panel control function may be mapped or configured as a force touch action function. The screens of FIG. 9 may be an example in which a volume panel control function is applied in a media application.

A user may input a force touch 920 while watching an image through an image reproduction screen (e.g., application execution screen) 910, as illustrated in a screen 901.

Although not illustrated in the example of FIG. 9, the electronic device 101 may provide a force touch situation UI (not illustrated) to the display, based on recognition of a force touch. For another example, the electronic device 101 may, based on recognition of a force touch, flicker an LED lamp or the screen, provide a haptic effect, or output a sound to notify the user of the recognition of a force touch. The force touch situation UI may be displayed or not displayed according to a configuration. The force touch situation UI may provide an environment for identifying whether the force touch is a force touch intended by the user or, when the force touch is not a force touch intended by the user, inducing touch release.

The electronic device 101 may, as illustrated in a screen 902, provide a volume panel adjustment bar 930 mapped to the force touch to the image reproduction screen 910, based on the recognition of the force touch. When the user maintains a drag 925 in a second direction while maintaining the force touch 920, the electronic device 101 may adjust the volume of the video according to the drag direction. As described above, as in the example of FIG. 9, the electronic device 101 may, after force touch recognition, provide a 2-step touch gesture function of detecting a drag input without a separate pressure sensor so as to improve a user experience.

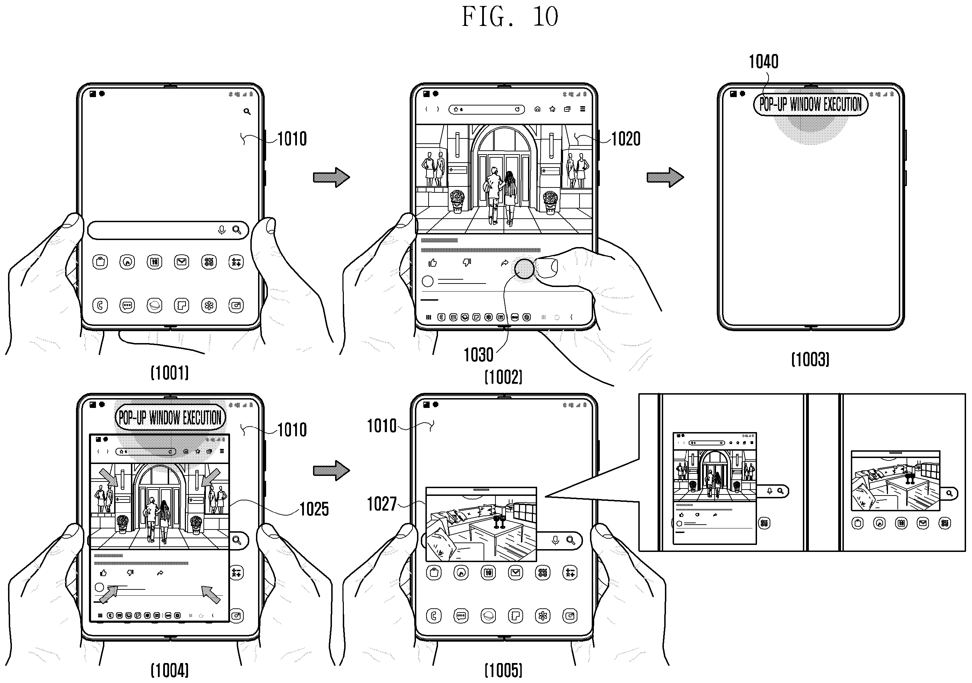

FIG. 10 illustrates force touch management screens of an electronic device according to an embodiment.

Referring to FIG. 10, in an electronic device (e.g., the electronic device 101 in FIG. 1) according to an embodiment, a pop-up window function may be mapped or configured as a force touch action function. The screens of FIG. 10 may show an example of a state where a pop-up window function is applied in a media content application.

A screen 1001 may show an example of a state where a home screen 1010 is displayed on the display. A user may select a media content app icon on the home screen 1010 to execute a media content application.

A user may input a force touch 1030 while the electronic device is displaying a media streaming reproduction screen (e.g., application execution screen) 1020 on the display, as shown in a screen 1002. The electronic device 101 may, before long touch recognition, analyze pieces of touch data to determine whether a force touch is recognized.

As illustrated in a screen 1003, the electronic device 101 may display a force touch situation UI 1040, based on recognition of a force touch. The force touch situation UI 1040 may be omitted. Alternatively, the electronic device 101 may notify the user of the recognition of a force touch by using an effect such as screen flickering or a haptic effect.

A screen 1004 shows an example of a state where, when it is determined that a force touch is recognized in the streaming reproduction screen displayed on the display, a pop-up window function is executed as a force touch action function. The electronic device 101 may display the streaming reproduction screen to overlap with the home screen 1010 in response to the force touch by using a pop-up window 1025.

A screen 1005 may be an example in which the electronic device 101 reconfigures a screen layout of the pop-up window 1025 in consideration of a characteristic of the media content application and displays the reconfigured pop-up window 1027 on the display. For example, the electronic device 101 may process a top layout and a bottom layout of the streaming reproduction screen by using a hiding function, and process only a streaming image to be displayed.

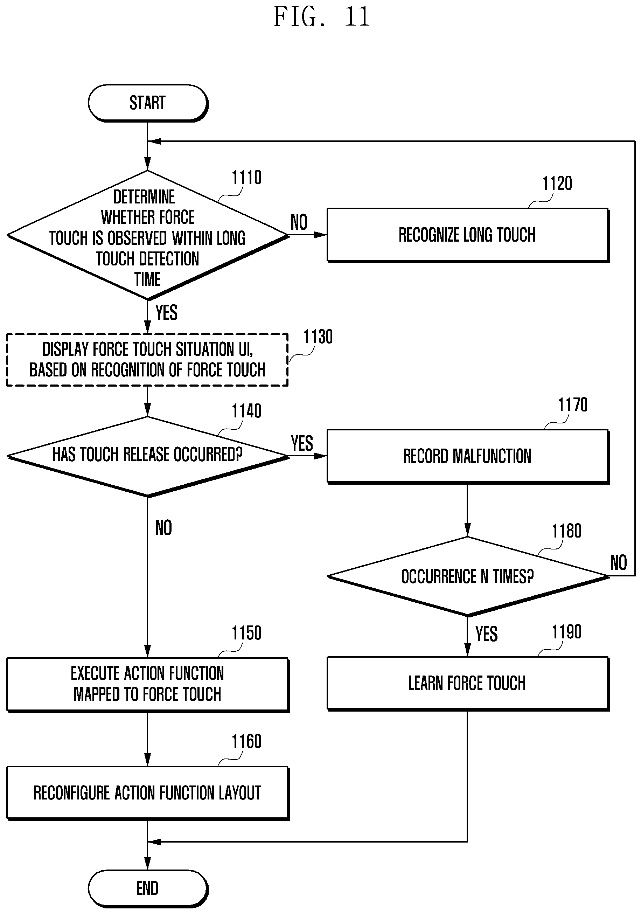

FIG. 11 illustrates a method of improving an artificial intelligence-based force touch operation of an electronic device according to an embodiment.

In the embodiment below, operations may be sequentially performed, but sequential performance is not necessarily required. For example, the sequence of operations may be changed, and at least two operations may be performed in parallel.

Referring to FIG. 11, a processor (e.g., the processor 120 in FIG. 1 or the processor 520 in FIG. 5) of an electronic device (e.g., the electronic device 101 in FIG. 1) according to an embodiment may, in operation 1110, determine whether a force touch, the touch area of which gradually increases, is observed within a long touch detection time.

For example, the processor 520 may observe whether a force touch is generated during a force observation interval within a configured long touch detection period (e.g., 500 ms), and perform a pressure calculation for the touch after the force observation interval to determine whether a force touch exists. The pressure calculation may be a process of, based on an artificial intelligence network, receiving pieces of touch data (or input data) and outputting pieces of force data (or output data). The touch data may indicate touch video data and the force data may indicate virtual force data.

The processor 520 may determine whether a force touch is recognized, through a pressure calculation or perform long touch determination for the touch after determination of whether a force touch exists.

In operation 1120, the processor 520 may recognize a long touch when a force touch is not recognized and the touch is maintained for a configured long touch detection time.

According to an embodiment, in the process of determining a force touch, the electronic device 101 may learn pieces of touch data to adjust touch sensitivity and adjust a touch area so as to improve a touch recognition rate. For example, the processor 520 may receive form factor state information and holding information of the electronic device and learn the user's touch recognition area according to the form factor state information and the holding information to dynamically adjust a threshold value (or reference touch area) for a force touch (or update a force touch recognition model). The electronic device 101 may learn the user's pieces of touch data to adjust a touch recognition area varying according to the current form factor state and grip state so as to improve a touch recognition rate.

In operation 1130, the processor 520 may display a force touch situation UI, based on recognition of a force touch.

According to an embodiment, operation 1130 may be omitted.

In operation 1140, the processor 520 may determine whether touch release is generated.

In operation 1150, the processor 520 may execute a force touch action function mapped to the force touch, based on touch release not being generated and the force touch being maintained.

In operation 1160, the processor 520 may reconfigure a screen layout of the force touch action function and dynamically change and display same on the display. For example, the processor 520 may determine a screen layout of the force touch action function, based on at least one of the form factor state of the electronic device and/or information on an application being executed.

In operation 1170, when touch release is generated in a situation where the force touch situation UI is displayed or when touch release is generated after a force touch is recognized, the processor 520 may record malfunction situation information of the force touch.

In operation 1180, the processor 520 may determine whether the malfunction of a force touch repeatedly occurs N times, and if the malfunction occurs a number of times smaller than N, may return to operation 1110 to determine again whether a force touch is observed.

In operation 1190, if the malfunction of a force touch is repeated N or more times, the processor 520 may perform a force touch learning operation for touch sensitivity. The force touch learning operation will be described with reference to FIG. 13 later.

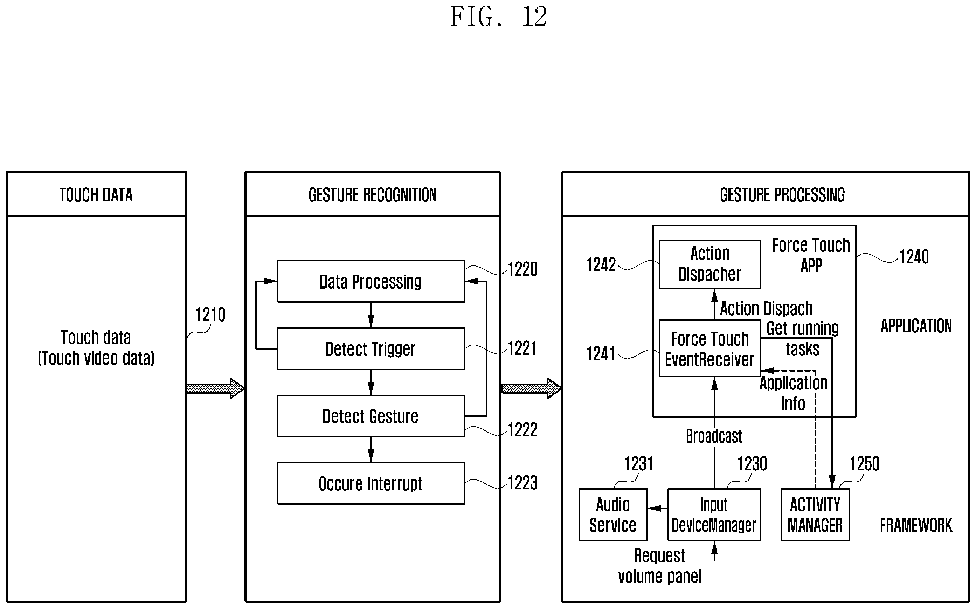

FIG. 12 illustrates touch gesture processing operations according to an embodiment.

Referring to FIG. 12, a processor (e.g., the processor 120 in FIG. 1 or the processor 520 in FIG. 5) of an electronic device (e.g., the electronic device 101 in FIG. 1) according to an embodiment may receive touch data (e.g., touch raw data or touch video data) 1210 from a touch sensor. The processor 520 may recognize a force touch gesture by performing a data processing operation 1220 (e.g., convert touch data into force data), a trigger detection operation 1221 (e.g., determine a force touch calculation), a gesture detection operation 1222 (e.g., determine a force touch), and an interrupt generation operation 1223.

The processor 120 may process a recognized gesture through a framework layer and an application layer. For example, an interrupt signal for gesture recognition may be transmitted to an input device manager 1230. For example, if a volume panel control function is mapped as a force touch recognition function, the input device manager 1230 may request an audio service 1231 of the framework layer for volume panel control. The input device manager 1230 may transfer a force touch gesture event to a force touch app 1240 (e.g., the force touch action app 315 in FIG. 3) of the application layer. An activity manager 1250 may transfer information of an application currently being executed to the force touch app 1240.

The force touch app 1240 may transfer a force touch gesture event (e.g., interrupt) to an action dispatcher 1242, based on reception of the event through a force touch event receiver app 1241. The action dispatcher 1242 may designate a touch force action function execution routine corresponding to a touch force. The touch action event receiver 1241 may transfer an execution task for a touch force action function execution routine to the activity manager 1250.

The processor 120 may, in a state where a force touch gesture (or interrupt occurrence) is recognized, when touch release is generated, record a malfunction situation for a force touch and when the same situation is repeatedly recorded N or more times, perform a force touch learning procedure for touch sensitivity.

FIG. 13 illustrates a force touch learning method of an electronic device according to an embodiment.

In the embodiment below, operations may be sequentially performed, but sequential performance is not necessarily required. For example, the sequence of operations may be changed, and at least two operations may be performed in parallel.

Referring to FIG. 13, an electronic device (e.g., the electronic device 101 in FIG. 1) according to an embodiment may provide a force touch learning function, based on pieces of touch data. A processor (e.g., the processor 120 in FIG. 1 or the processor 520 in FIG. 5) may recognize whether force touch learning is required, in operation 1310. The processor 520 may terminate the process of FIG. 13 if force touch learning is not required.

When touch sensitivity correction is required in a data processing process based on a force touch, the processor 520 may perform operation 1320 to 1345 to perform a touch sensitivity learning procedure. Alternatively, when the form factor state and/or grip state of the electronic device is changed, the processor 120 may perform operation 1350 to 1375 to perform a touch area learning procedure.

When explaining the touch sensitivity learning procedure, in operation 1320, the processor 520 may, after force touch recognition, determine whether a malfunction situation (or a situation where a force touch is recognized differently from the user's intent) caused by touch release repeatedly occurs N times. The processor 520 may, after force touch recognition, when a malfunction situation caused by touch release is not repeated N times, terminate the process of FIG. 13.

In operation 1325, the processor 520 may display a sensitivity correction UI when a malfunction situation repeatedly occurs N times. For example, the sensitivity correction UI may be provided by using a pop-up window, but is not limited thereto.

In operation 1330, the processor 520 may, when the user selects the sensitivity correction UI, enter a sensitivity correction configuration mode, and in operation 1335, the processor 520 may determine a touch method, based on an input obtained in the sensitivity correction configuration mode.

In operation 1340, the processor 520 may move a touch controller included in a sensitivity adjustment bar to the user's touch position. In operation 1340, the processor 520 may change a configuration of touch sensitivity according to the position of the touch controller. The changed configuration of touch sensitivity may be applied to touch gesture learning of the electronic device.

When explaining the touch area learning procedure, in operation 1350, the processor 520 may identify pieces of touch data stored in a database (DB) while the electronic device is in use.

In operation 1355, the processor 520 may identify a form factor state and a grip state of the electronic device. For example, the processor 520 may identify whether the electronic device is operating. The processor 520 may identify a form factor state (e.g., folded/unfolded/intermediate state). The processor 520 may determine whether the electronic device is gripped by one hand or gripped by two hands by using a grip sensor. The processor 520 may determine the current inclination state of the electronic device by using acceleration and gyro sensors.

In operation 1360, the processor 520 may determine whether a touch recognition area of touch data being currently processed is included in a range of a minimum value to a maximum value of the pieces of touch data stored in the database. The threshold of the minimum value or maximum value may be dynamically adjusted through a learning model. For example, since there are various cases, such as children, adults, men, women, people with large hand areas, and people with small hand areas, the electronic device 101 may support a function of adjusting a threshold for each user through touch area learning.

In operation 1365, the processor 520 may perform filtering for an area corresponding to a designated value in each frame.

In operation 1370, the processor 520 may determine a recognition model based on a dynamic area and touch data stored in the database (DB), and in operation 1375, the processor 520 may update the recognition model based on a dynamic area.

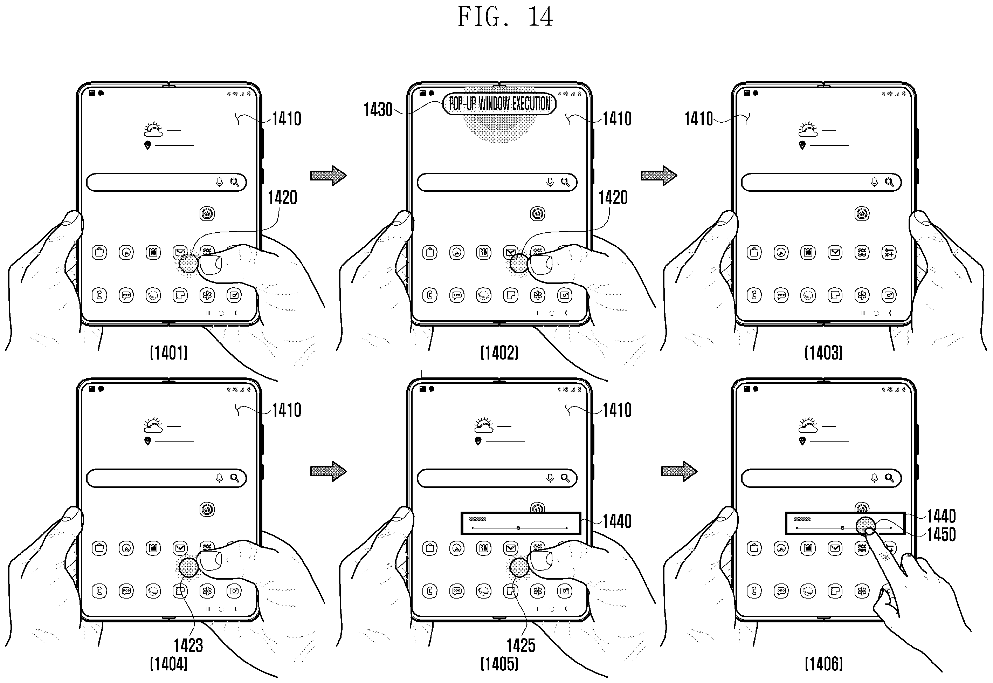

FIG. 14 illustrates screens of inducing touch sensitivity adjustment according to force touch learning at the time of force touch management by an electronic device according to an embodiment.

Referring to FIG. 14, an electronic device (e.g., the electronic device 101 in FIG. 1) according to an embodiment may be in a state where a pop-up window execution function is mapped (or configured) as a force touch action.

A screen 1401 may be an example of illustrating a home screen 1410 of the electronic device 101. As illustrated in the screen 1401, a user may perform a long touch input 1420. The electronic device 101 may, before long touch detection, determine whether a force touch is recognized. For example, even though the user has intended a long touch input, the electronic device 101 may recognize the input as a force touch by determining that a skin area gradually increases after a predetermined time, based on a touch area.

As shown in a screen 1402, the electronic device 101 may display a force touch situation UI 1430 on the display, based on recognition of a force touch.

As shown in a screen 1403, the user may identify, through the force touch situation UI, that a force touch unintended by the user is recognized, and perform a touch release operation. When touch release is generated in a situation where the force touch situation UI is displayed, the electronic device 101 may recognize a force touch malfunction situation unintended by the user and record the malfunction situation.

A screen 1404 may show an example in which, after the electronic device 101 recognizes a force touch 1423, a user experience for a force touch malfunction, such as the occurrence of touch release, has repeatedly occurred N times.

As shown in a screen 1405, the electronic device 101 may display a sensitivity correction UI 1440 of recommending force touch sensitivity adjustment to the user on the display, after the occurrence of the force touch malfunction N times. The sensitivity correction UI 1440 may be implemented as a pop-up window including a touch sensitivity adjustment bar, but is not limited thereto.

As shown in a screen 1406, the user may enter a sensitivity correction configuration mode through the sensitivity correction UI 1440, and change a touch sensitivity configuration by adjusting an adjustment bar 1450.

Although an example of adjusting a touch sensitivity configuration by a user through a sensitivity correction UI has been described with reference to the example screens of FIG. 14, according to an embodiment, the electronic device 101 may support a function of analyzing the user's force touch pattern, based on an artificial intelligence network, and automatically changing a touch sensitivity configuration, based on determining, based on a result of the analysis, that the adjustment of force touch sensitivity is required. For example, the electronic device 101 supports an automatic touch sensitivity configuration option, and when the automatic touch sensitivity configuration option is configured by the user to be turned on, the electronic device may automatically change a touch sensitivity configuration according to the user's force touch pattern and display, on the display, notification information such as "The force touch sensitivity configuration has been changed. To recognize a force touch, press slightly harder/softer than you are currently".

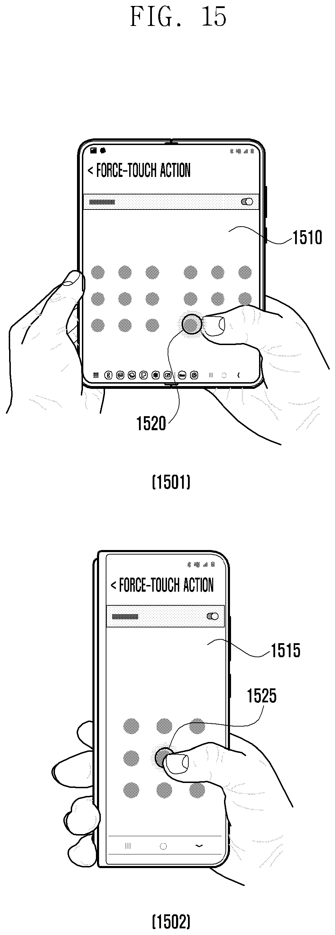

FIG. 15 illustrates manual learning configuration screens for touch area learning at the time of force touch management by an electronic device according to an embodiment.

Referring to FIG. 15, an electronic device (e.g., the electronic device 101 in FIG. 1) according to an embodiment may provide a function of manually learning a force touch area according to a form factor state and a grip state of the electronic device 101.

A screen 1501 shows an example of a touch area learning UI 1510 according to a user's grip by two hands in a first state of a foldable electronic device. The user may input a force touch 1520 on various positions while gripping the electronic device with two hands.

A screen 1502 shows an example of a touch area learning UI 1515 according to a user's grip by one hand in a second state of a foldable electronic device. The user may input a force touch 1525 on various positions while gripping the electronic device by one hand.

The electronic device 101 may provide the screen 1501 or the screen 1502 according to a user's request to configure force touch area learning, to learn the user's force touch area and adjust a threshold value for a touch area.

In the examples of FIG. 15, screens for manual learning of a force touch area are illustrated. However, the electronic device 101 may support a function of automatically learning a touch area, based on an artificial intelligence network (e.g., machine learning or deep learning), based on the user's pieces of touch data according to the form factor state and the grip state of the electronic device. For example, when the form factor state or the grip state of the electronic device is changed according to touch area learning, the electronic device 101 may dynamically change a threshold value (e.g., reference touch area) for force touch recognition.

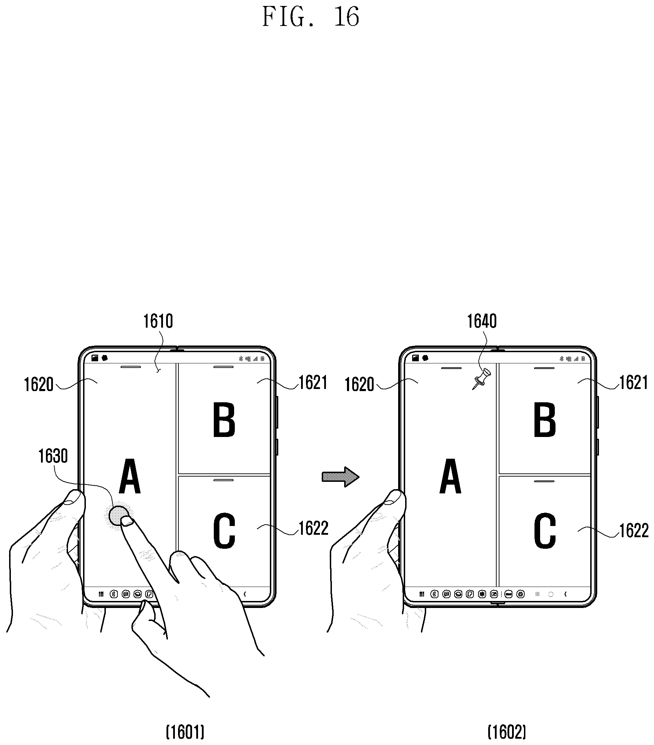

Hereinafter, examples of force touch action execution for each force touch action configuration are illustrated in FIG. 16 to FIG. 20.

FIG. 16 to FIG. 20 illustrate force touch management inventions for each force touch action configuration according to various embodiments. The example screens of FIG. 16 to FIG. 20 omit the process of displaying a force touch situation UI, based on force touch recognition, but each example screen may provide a force touch situation UI before execution of a force touch action function.

The screens of FIG. 16 may show an example of a window screen fixing function for a split window (e.g., 3-split window) on a display. An electronic device (e.g., the electronic device 101 in FIG. 1) according to an embodiment may be in a state where a multi-window screen fixing function is mapped (or configured) as a force touch action. For example, the electronic device 101 may, as illustrated in a screen 1601, display a split window screen 1610 including an app A screen 1620, an app B screen 1621, and an app C screen 1622 on the display. The electronic device 101 may, based on recognition of a force touch 1630 in a state where the split window screen 1610 is displayed, as illustrated in a screen 1602, execute a configured force touch action function, for example, fix the app A screen 1620 including the position at which the force touch is recognized. The electronic device 101 may, as a result of execution of the force touch action function, display an indicator 1640 for completion of app A screen fixing. In the screen 1602, it is possible for the app B screen 1621 and the app C screen 1622 to be subjected to window position change and screen change to another app.

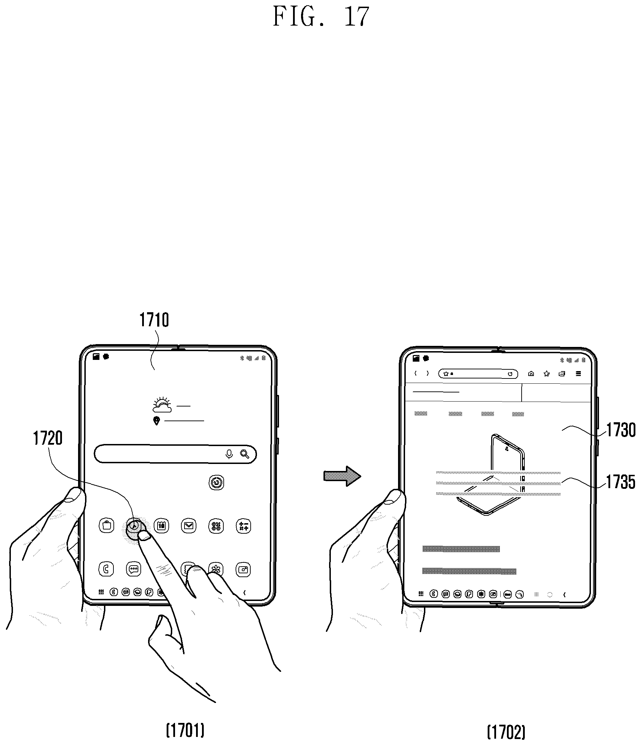

The screens of FIG. 17 may show an example of a live caption function of an audio application (e.g., radio execution or media reproduction in progress). The electronic device 101 according to an embodiment may be in a state where a live caption function is mapped (or configured) as a force touch action. The live caption function may be an action function of converting audio being reproduced in real-time into text and displaying the text on the screen. The electronic device 101 may, as illustrated in a screen 1701, execute an audio function (e.g., radio execution or music execution) on the background, and display a home screen 1710 on the display.

The electronic device 101 may, as shown in a screen 1702, based on recognition of a force touch 1720, execute a configured force touch action function, for example, a live caption function and reconfigure and display, on the display, a layout screen 1730 based on the live caption function. For example, the electronic device 101 may convert audio being executed on the background into text and convert the screen into the layout screen 1730 for displaying converted text 1735 to display the layout screen. The text 1735 displayed on the screen 1702 may support a copy/paste function.

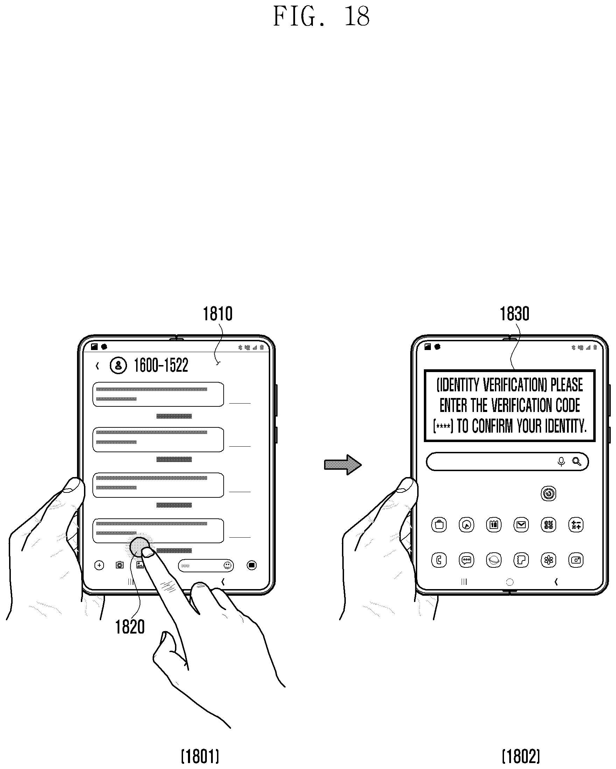

The screens of FIG. 18 may show an example of a flash memo function of a message application. The electronic device 101 according to an embodiment may be in a state where a flash memo function is mapped (or configured) as a force touch action. The flash memo function may be a function of determining a particular object (or object region) for a particular object (e.g., a message item) displayed on the screen and displaying the particular object by using a pop-up layout. The electronic device 101 may, as illustrated in a screen 1801, display a message app execution screen 1810 including a message list on the display. When a user performs an input of a force touch 1820 that selects a particular message, the electronic device 101 may, as illustrated in a screen 1802, based on recognition of the force touch, execute a configured force touch action function, for example, a flash memo function to display the selected message by using a pop-up window (or flash memo window) 1830. The pop-up window, that is, the flash memo window 1830 may disappear from the display after being displayed for configured N seconds.

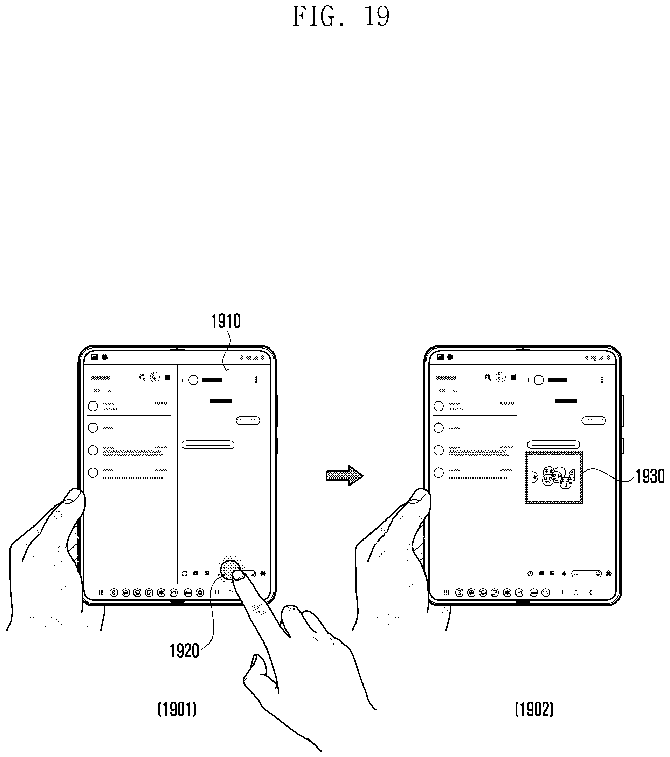

The screens of FIG. 19 may show an example of a clipboard input function related to a text input field attribute. The electronic device 101 according to an embodiment may be in a state where a clipboard input function is mapped (or configured) as a force touch action. A clipboard caption function may be a function of, when a force touch input is received on a text input field, automatically inserting content lastly stored in a clipboard into the text input field. The electronic device 101 may, as illustrated in a screen 1901, display a message conversation screen 1910 including a text input field on the display. When a user performs an input of a force touch 1920 that selects the text input field, the electronic device 101 may, as illustrated in a screen 1902, based on recognition of the force touch, execute a configured force touch action function, for example, a clipboard input function to insert content (e.g., text or an image) 1930 lastly stored in a clipboard into the input field and transmit the content.

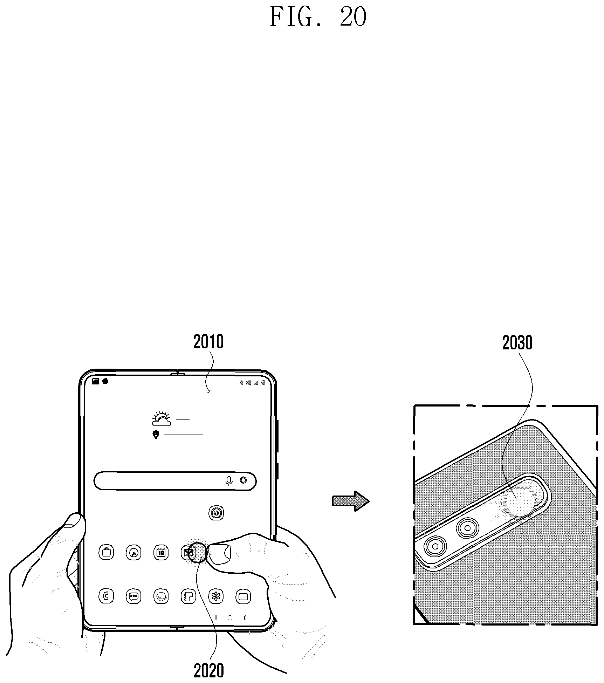

The screens of FIG. 20 may show an example of a function of controlling a flash (or flashlight) 2030. The electronic device 101 according to an embodiment may be in a state where a flash control function is mapped (or configured) as a force touch action. The electronic device 101 may, as illustrated in FIG. 20, display a home screen 2010 on the display. When a user performs an input of a force touch 2020 on the home screen, the electronic device 101 may turn on a configured force touch action function, for example, a flashlight function, based on recognition of the force touch. When a force touch input is detected again while the flashlight function is turned on, the electronic device may turn off the flashlight function.

Although not illustrated in the drawings, a force touch action function may be variously configured. For example, the electronic device may provide, as a force touch action function, a function of generating a screenshot and then sharing same with another electronic device, a function of searching for a specific word in a text screen by using a dictionary, a function of selecting a file and then previewing same, a function of selecting a schedule and then creating a new calendar, a function of changing the fast-forward or rewind speed during image reproduction, or a function of editing a file name, but the disclosure is not limited thereto.

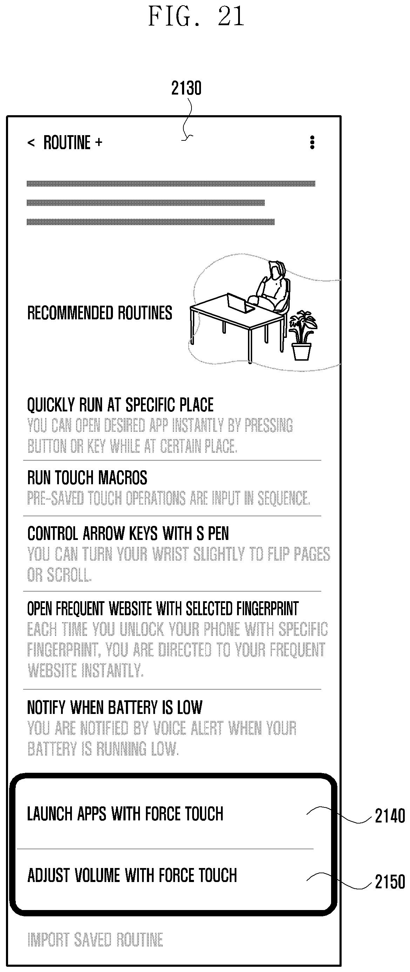

FIG. 21 illustrates a screen of supporting an on/off configuration of a force touch action function in an electronic device according to an embodiment.

Referring to FIG. 21, an electronic device (e.g., the electronic device 101 in FIG. 1) according to an embodiment may also support a function of executing an app through a force touch input or a function of adjusting volume through a force touch input. A screen 2130 of FIG. 21 may indicate a screen for configuring a quick execution function triggered by a particular gesture. For example, when a user selects an item 2140 of executing an app by using a force touch, the electronic device 101 may provide a configuration mode for an application executed in response to a force touch, and configure the app designated by the user's selection to be executed by a force touch. As another example, when a user selects an item 2150 of adjusting volume by using a force touch, the electronic device 101 may provide a configuration mode for an application, the volume of which is adjusted in response to a force touch.

A method for improving a force touch operation according to an example embodiments comprises receiving touch data received from a touch sensor. The method according to an example embodiments comprises, based on the touch data, determining whether a force touch having a gradually increasing variation of skin compression according to a touch area is recognized within a long touch detection time. The method according to an example embodiments comprises based on recognition of the force touch, executing a force touch action function mapped to the force touch. The method according to an example embodiments comprises at a time of the recognition of the force touch, learning a malfunction situation for the force touch and, in case that sensitivity adjustment of the force touch is required, displaying a sensitivity correction UI on a display.

The display according to an example embodiments comprises a flexible display having a variable display region in which visual information is displayed.

The method according to an example embodiments comprises determining whether the force touch is recognized.

The method according to an example embodiments comprises receiving an electronic device form factor state and/or grip state from a sensor module.

The method according to an example embodiments comprises learning a touch recognition area according to the electronic device form factor state and/or grip state to dynamically adjust a threshold value of a force touch recognition model configured to determine skin compression, so as to determine whether the force touch is recognized.

The force touch recognition model according to an example embodiments is configured to receive touch data as input data and output force touch data, based on an artificial intelligence network.

The determining of whether the force touch is recognized according to an example embodiments comprises displaying a force touch situation UI on the display, based on the recognition of the force touch.

The displaying of the sensitivity correction UI on the display according to an example embodiments comprises, in case that a user's touch release occurs in a state where the force touch situation UI is displayed or after the force touch is recognized, recording the malfunction situation, and, in case that the malfunction situation is repeated configured N or more times, a state where sensitivity adjustment of the force touch is required is recognized, and the sensitivity correction UI is displayed.

The determining of whether the force touch is recognized according to an example embodiments comprises observing whether a force touch occurs in a force touch observation interval before a configured long touch detection period, and performing a pressure calculation in a force touch determination interval to determine whether a force touch is recognized.

The observing of whether the force touch occurs in the force touch observation interval according to an example embodiments comprises, in case that a variation of skin compression based on a touch area gradually increases over time, observing a corresponding touch as a force touch, and in case that a variation of skin compression based on a touch area is maintained at a constant size over time, observing a corresponding touch as a long touch.

the force touch action function according to an example embodiments comprises an action function designatable for each application and/or a global action function applicable to an electronic device system.

The method according to an example embodiments further comprises an operation of receiving information on an application being executed. The operation of receiving information on an application being executed comprise, in case that the force touch is recognized in a state where the application is executed, reconfigure, based on the information on the application, a screen layout of the force touch action function to dynamically change and display a screen.

The method according to an example embodiments further comprises an operation of receiving a user input for adjusting a touch controller displayed on the sensitivity compensation UI and an operation of changing a touch sensitivity setting according to a position of the touch controller

## Claims

1. An electronic device comprising:
a display;
a touch sensor;
a memory; and
a processor,
wherein the memory includes instructions configured to cause the processor to:
based on touch data received from the touch sensor, determine whether a force touch having a gradually increasing variation of skin compression according to a touch area is recognized within a long touch detection time;
based on recognition of the force touch being maintained for a predetermined time, execute a force touch action function mapped to the force touch; and
learn a malfunction situation for the force touch and, in case that sensitivity adjustment of the force touch is required, display a sensitivity correction UI on the display.

2. The electronic device of claim 1, wherein the display comprises a flexible display having a variable display region in which visual information is displayed,
wherein the processor is further configured to receive an electronic device form factor state and/or grip state from a sensor module and learn a touch recognition area according to the electronic device form factor state and/or grip state to dynamically adjust a threshold value of a force touch recognition model configured to determine skin compression, and
wherein the force touch recognition model is configured to receive touch data as input data and output force touch data, based on an artificial intelligence network.

3. The electronic device of claim 1 or 2, wherein the processor is configured to display a force touch situation UI on the display, based on the recognition of the force touch.

4. The electronic device of claim 3, wherein the processor is configured to, in case that a user's touch release occurs in a state where the force touch situation UI is displayed or after the force touch is recognized, record the malfunction situation and, in case that the malfunction situation is repeated configured N or more times, recognize that sensitivity adjustment of the force touch is required.

5. The electronic device of claim 1, wherein the processor is configured to observe whether a force touch occurs in a force touch observation interval before a long touch detection period, and perform a pressure calculation in a force touch determination interval to determine whether a force touch is recognized.

6. The electronic device of claim 5, wherein the processor is configured to, in case that a variation of skin compression based on a touch area gradually increases over time, observe a corresponding touch as a force touch, and in case that a variation of skin compression based on a touch area is maintained at a constant size over time, observe a corresponding touch as a long touch.

7. The electronic device of claim 1, wherein the force touch action function comprises an action function designatable for each application and/or a global action function applicable to an electronic device system.

8. The electronic device of claim 1, wherein the processor is configured to receive information on an application being executed and, in case that the force touch is recognized in a state where the application is executed, reconfigure, based on the information on the application, a screen layout of the force touch action function to dynamically change and display a screen.

9. The electronic device of claim 1, wherein the sensitivity correction UI comprises a touch controller and is configured to enable touch sensitivity adjustment according to a position of the touch controller depending on a user input.

10. A method of improving a force touch operation of an electronic device, the method comprising:
receiving touch data received from a touch sensor;
based on the touch data, determining whether a force touch having a gradually increasing variation of skin compression according to a touch area is recognized within a long touch detection time;
based on recognition of the force touch, executing a force touch action function mapped to the force touch; and
at a time of the recognition of the force touch, learning a malfunction situation for the force touch and, in case that sensitivity adjustment of the force touch is required, displaying a sensitivity correction UI on a display.

11. The method of claim 10, wherein the display comprises a flexible display having a variable display region in which visual information is displayed,
wherein the method further comprises:
determining whether the force touch is recognized;
receiving an electronic device form factor state and/or grip state from a sensor module; and
learning a touch recognition area according to the electronic device form factor state and/or grip state to dynamically adjust a threshold value of a force touch recognition model configured to determine skin compression, so as to determine whether the force touch is recognized, and
wherein the force touch recognition model is configured to receive touch data as input data and output force touch data, based on an artificial intelligence network.

12. The method of claim 10 or 11, wherein the determining of whether the force touch is recognized further comprises displaying a force touch situation UI on the display, based on the recognition of the force touch.

13. The method of claim 12, wherein the displaying of the sensitivity correction UI on the display further comprises, in case that a user's touch release occurs in a state where the force touch situation UI is displayed or after the force touch is recognized, recording the malfunction situation, and
wherein in case that the malfunction situation is repeated configured N or more times, a state where sensitivity adjustment of the force touch is required is recognized, and the sensitivity correction UI is displayed.

14. The method of claim 10, wherein the determining of whether the force touch is recognized comprises observing whether a force touch occurs in a force touch observation interval before a configured long touch detection period, and performing a pressure calculation in a force touch determination interval to determine whether a force touch is recognized.

15. The method of claim 14, wherein the observing of whether the force touch occurs in the force touch observation interval comprises, in case that a variation of skin compression based on a touch area gradually increases over time, observing a corresponding touch as a force touch, and in case that a variation of skin compression based on a touch area is maintained at a constant size over time, observing a corresponding touch as a long touch.
